# EUROPÄISCHE PATENTSCHRIFT

(11) **EP 1 302 735 B1**
(45) Veröffentlichungstag und Bekanntmachung des Hinweises auf die Patenterteilung: **01.01.2014**
(21) Anmeldenummer: 02019842.0
(22) Anmeldetag: 09.09.2002
(51) Int. Cl.: F26B 3/28

(54) **Vorrichtung und Verfahren zur Zuführung von Strahlungsenergie auf einen Bedruckstoff in einer Flachdruckmaschine**
Apparatus and process for supplying radiation energy onto printing material in a planographic printing machine
Dispositif et procédé pour délivrer de l'énergie rayonnante sur un support d'impression dans une machine d'impression planographique

(30) Priorität: 10.10.2001 DE 10149844; 26.07.2002 DE 10234076
(43) Veröffentlichungstag der Anmeldung: 16.04.2003
(73) Patentinhaber: Heidelberger Druckmaschinen Aktiengesellschaft, 69115 Heidelberg (DE)
(72) Erfinder: Pitz, Heiner Dr., 69115 Heidelberg (DE)
(74) Vertreter: Fey, Hans-Jürgen

(56) Entgegenhaltungen:
- EP-A- 0 680 832
- WO-A-99/42774
- CH-A5- 639 800
- GB-A- 2 142 874
- US-A- 3 286 369
- US-A- 3 590 495
- PATENT ABSTRACTS OF JAPAN Bd. 016, Nr. 426 (M-1306), 8. September 1992 (1992-09-08) & JP 04 144748 A (INOUE KINZOKU KOUGIYOU KK), 19. Mai 1992 (1992-05-19)
- AMERICAN DYE SOURCE, INC.: "Near Infrared Dyes" April 2001 (2001-04), , XP002395972 * das ganze Dokument *
- PATENT ABSTRACTS OF JAPAN Bd. 014, Nr. 526 (C-0779), 19. November 1990 (1990-11-19) & JP 02 219869 A (MITSUBISHI KASEI CORP), 3. September 1990 (1990-09-03)

## Beschreibung

Die Erfindung betrifft eine Vorrichtung zur Zuführung von Strahlungsenergie einer Wellenlänge im nahen Infrarot auf einen Bedruckstoff in einer Flachdruckmaschine mit wenigstens einer Strahlungsenergiequelle, deren Licht auf den Bedruckstoff auf dem Pfad des Bedruckstoffes durch die Druckmaschine an einer Position trifft, welche wenigstens einem Druckspalt in einem Druckwerk nachgeordnet ist. Des weiteren betrifft die Erfindung ein Verfahren zum Zuführen von Strahlungsenergie einer Wellenlänge im nahen Infrarot auf einen Bedruckstoff in einer Flachdruckmaschine.

In Abhängigkeit von der Art der Druckfarbe und dem zugrundeliegenden speziellen Trocknungsprozess sind verschiedene Vorrichtungen an Druckmaschinen, insbesondere Flachdruckmaschinen, wie lithographischen Druckmaschinen, Rotationsdruckmaschinen, Offsetdruckmaschinen und dergleichen, welche bogenförmige oder bahnförmige Bedruckstoffe, insbesondere Papier, Pappe, Karton und dergleichen, verarbeiten, bekannt, welche eine Haftung der Farbe auf dem Bedruckstoff auslösen oder unterstützen, indem Strahlungsenergie der auf dem Bedruckstoff befindlichen Druckfarbe zugeführt wird.

Die sogenannten UV-Farben härten durch Polymerisation, welche durch Photoinitiation mittels Licht im Ultraviolett ausgelöst wird, aus. Dagegen existieren in weiter Verbreitung lösemittelhaltige Druckfarben, welche sowohl einem physikalischen als auch einem chemischen Trocknungsprozess unterliegen können. Die physikalische Trocknung umfasst die Verdunstung von Lösemitteln und die Diffusion in den Bedruckstoff (Wegschlagen), während unter chemischer Trocknung bzw. oxidativer Trocknung aufgrund einer Polymerisation der in den Farbrezepturen enthaltenen Öle, Harze, Bindemittel oder dergleichen gegebenenfalls unter Mitwirkung von Luftsauerstoff verstanden wird. Die Trocknungsprozesse sind im allgemeinen abhängig voneinander, da durch das Wegschlagen der Lösemittel eine Separation innerhalb des Bindemittelsystems zwischen Lösemitteln und Harzen stattfindet, wodurch die Harzmoleküle sich annähern und gegebenenfalls leichter polymerisieren können.

Beispielsweise aus der EP 0 355 473 A2 ist eine Vorrichtung zum Trocknen von Druckprodukten bekannt, welche eine Strahlungsenergiequelle in Form eines Lasers umfasst. Die Strahlungsenergie wird auf die Oberfläche der Bedruckstoffe, die sich auf einer Bahn mittels einer Transporteinrichtung durch die Druckmaschine bewegen, an einer Position zwischen einzelnen Druckwerken oder nach dem letzten Druckwerk vor oder in dem Ausleger geleitet. Die Strahlungsquelle kann dabei ein Laser im Ultravioletten für UV-Farben oder eine Laserlichtquelle im Infraroten zur Erwärmung von lösemittelhaltigen Druckfarben sein. Die Strahlungsenergiequelle ist außerhalb der Druckmaschine angeordnet, um zu vermeiden, dass aufgrund von unvermeidbarer oder abschirmbarer Verlustwärme unerwünscht Teile der Druckmaschine erwärmt werden. Nachteilig ist hierbei jedoch, dass eine zusätzliche Systemkomponente dem Druckmaschinenbenutzer separat zur Verfügung gestellt werden muss.

Des weiteren ist zum Beispiel aus dem Dokument US 6,026,748 bekannt, dass an einer Druckmaschine eine Trocknungsvorrichtung mit Infrarotlampen, welche kurzwelliges Infrarotlicht (nahes Infrarot) oder mittelwelliges Infrarotlicht emittieren, vorgesehen sein kann. Das Emissionsspektrum von Lampenlichtquellen ist breitbandig und führt folglich zu einem Angebot einer Vielzahl von Wellenlängen. Nachteilig bei derartigen Trocknungsvorrichtungen im Infraroten ist, dass ein relevanter Anteil der Energieabsorption im Papier stattfindet, wobei die Farbe nur indirekt erwärmt wird. Eine schnelle Trocknung ist nur durch einen entsprechend hohen Energieeintrag möglich. Dabei besteht aber unter anderem die Gefahr, dass der Bedruckstoff ungleichmäßig austrocknet und wellig werden kann.

Aus der JP 04-144748 A ist eine Vorrichtung zum Trocknen einer Beschichtung auf einem Substrat bekannt. Die Beschichtung kann feuchtigkeitslos sein. Das Substrat kann Feuchtigkeit aufweisen. Die Vorrichtung weist eine Strahlungsenergiequelle auf. Diese emittiert breitbandig elektromagnetische Strahlung im infraroten Bereich. Um zu verhindern, dass durch die IR-Strahlung ggf. die Feuchtigkeit im Substrat erhitzt wird, ist ein zusätzlicher Filter vorgesehen. Dieser Filter besteht aus einer aufwändigen Konstruktion umfassend eine Blaseinrichtung für Feuchtigkeit enthaltende Luft und einer zugeordneten Saugeinrichtung, sowie der notwendigen weiteren Komponenten zur Erzeugung des feuchten Luftstroms. Ungefilterte und daher breitbandige IR-Strahlung, die ausgehend von der Quelle durch den Luftstrom-Filter tritt, wird von diesem gefiltert, d.h. es werden die Wellenlängen 2,9 µm und 5,8 µm herausgefiltert. Diese Wellenlängen können nun nicht mehr das Substrat erreichen und dort die enthaltene Feuchtigkeit erhitzen.

In der elektrophotographischen Drucktechnik ist zum Beispiel aus der DE 44 35 0 77 A1 bekannt, eine Fixierung von Toner auf einem Aufzeichnungsträger durch von Diodenlasern emittierter Strahlungsenergie im nahen Infrarot vorzunehmen. Durch den Einsatz einer schmalbandigen Lichtquelle wird eine Erhitzung der Tonerpartikel erreicht, um diese zu schmelzen, zu einer farbigen Schicht zu formen und auf der Oberfläche des Aufzeichnungsträgers zu verankern. Da in diesem Spektralbereich eine große Anzahl von gängigen Papiersorten breite Absorptionsminima aufweisen, ist es möglich, dass ein überwiegender Teil der Energie in den Tonerpartikeln direkt absorbiert werden kann.

Die einfache Kenntnis des Fensters im Papierabsorptionsspektrum lässt sich allerdings nicht unmittelbar in der Drucktechnik mit lösemittelhaltigen Druckfarben ausnutzen, da wie oben beschrieben andere chemische beziehungsweise physikalische Trocknungsprozesse zugrunde liegen. Im Zusammenhang mit der Erfindung sind mit dem Begriff der lösemittelhaltigen Druckfarbe insbesondere Farben gemeint, deren Lösungsmittelanteile wässriger oder organischer Natur sein können, die auf Bindemittelsystemen aufbauen, die sich oxidativ, ionische oder radikalisch polymerisieren lassen. Ein Energieeintrag zur Trocknung von lösemittelhaltigen Druckfarben soll den Effekt der Verdampfung des Lösemittels und/oder den Effekt des Wegschlagens in den Bedruckstoff und/oder den Effekt der Polymerisation unterstützen oder fördern, wobei gleichzeitig unerwünschte Nebeneffekte, wie insbesondere eine zu starke Erhitzung der lösemittelhaltigen Druckfarbe, welche zu Zersetzungen von Komponenten oder Überhitzung des Lösemittels führen kann, vermieden werden. Der Energieeintrag soll nicht nur, wie für den Fall der Tonerfixierung, zum Schmelzen von Partikeln eingebracht werden.

Aufgabe der vorliegenden Erfindung ist es, eine Vorrichtung und ein Verfahren innerhalb einer Flachdruckmaschine, in der lösemittelhaltige Druckfarben verwendet werden, zu schaffen, welche die Trocknungszeit von derartiger Druckfarbe verkürzt.

Diese Aufgabe wird erfindungsgemäß durch eine Vorrichtung zur Zuführung von Strahlungsenergie einer Wellenlänge im nahen Infrarot mit den Merkmalen gemäß Anspruch 1 und durch ein Verfahren zum Zuführen von Strahlungsenergie mit den Merkmalen gemäß Anspruch 11 gelöst. Vorteilhafte Weiterbildungen der Erfindung sind in den abhängigen Ansprüchen charakterisiert.

Die erfindungsgemäße Vorrichtung zur Zuführung von Strahlungsenergie einer Wellenlänge im nahen Infrarot auf einen Bedruckstoff in einer Flachdruckmaschine weist wenigstens eine Strahlungsenergiequelle auf, deren Licht auf den Bedruckstoff, insbesondere auf den frisch bedruckten Bedruckstoff, auf dem Pfad des Bedruckstoffes durch die Druckmaschine an einer Position trifft, welche wenigstens einem Druckspalt in einem Druckwerk nachgeordnet ist, und zeichnet sich dadurch aus, dass die Strahlungsenergiequelle im wesentlichen nur, bevorzugt nur Licht emittiert, dessen Wellenlänge nicht-resonant zu Absorptionswellenlängen von Wasser (H₂O)ist, dass die Strahlungsenergiequelle schmalbandig Licht emittiert, dessen Wellenlänge zwischen 700,00 nm und 2500,00 nm liegt und dass die Strahlungsenergiequelle ein Laser ist. Unter nicht-resonant zu Absorptionswellenlängen von Wasser ist im Zusammenhang der Erfindung zu verstehen, dass die Absorption der Lichtenergie durch Wasser bei 20° Celsius nicht stärker als 10,0 % ist, in bevorzugter Ausführung nicht stärker als 1,0 % ist, insbesondere unter 0,1 % liegt. Im Zusammenhang des erfinderischen Gedankens emittiert die Strahlungsenergiequelle nur sehr geringe Intensität von Licht, bevorzugt gar kein Licht, welches resonant zu Absorptionswellenlängen von Wasser (H₂O) ist.

Die Strahlungsenergiequelle kann hierbei zum Beispiel von bis zu ±50 nm Breite um eine Wellenlänge emittieren, es kann sich auch um eine oder mehrere einzelne spektroskopisch schmale Emissionslinien handeln. Des weiteren liegt in vorteilhafter Ausführungsform das Emissionsmaximum der schmalbandigen Strahlungsenergiequelle bzw. die Wellenlänge der Strahlungsenergie zwischen 700,00 nm und 3000,00 nm, bevorzugt zwischen 700,00 nm und 2500,00 nm, insbesondere zwischen 800,00 nm und 1300,00 nm, in einem Teilgebiet des sogenannten Fensters im Papierabsorptionsspektrum. Besonders vorteilhaft ist eine Emission bei 870,00 nm ± 50,00 nm und/oder 1050,00 nm ± 50,00 nm und/oder 1250,00 nm ± 50,00 nm und/oder 1600,00 nm ± 50,00 nm.

Der Erfindung liegt die Erkenntnis zugrunde, dass Absorptionsbanden von Wasser zum Papierabsorptionsspektrum beitragen. Schon der typische Wassergehalt von Bedruckstoffen im wasserlosen (feuchtmittelfreien) Flachdruck führt zu unerwünschter, manchmal auch unakzeptabel starker Energieabsorption im Bedruckstoff. Diese Absorption ist entsprechend noch stärker im Flachdruck mit Feuchtmittel ausgeprägt. Ein zu großer Energieeintrag in den Bedruckstoff kann konsequenterweise durch die Einstrahlung einer Wellenlänge vermieden werden, welche nicht-resonant zu einer Absorptionslinie oder Absorptionsbande (Absorptionswellenlänge) von Wasser ist. Nach der Hiltran Datenbank bei einer Temperatur von 296K, in 1m Absorptionsstrecke, 15000 ppm Wasser, ergibt sich die folgende Absorption durch Wasser, genauer durch Wasserdampf: Bei 808 nm kleiner als 0,5%, bei 870±10 nm kleiner als 0,01%, bei 940±10 nm kleiner als 10%, bei 980±10 nm kleiner als 0,5%, 1030±30 nm kleiner als 0,01%, 1064 nm kleiner als 0,01 nm, 1100nm kleiner als 0,5% und 1250±10 nm kleiner als 0,01%. Betrachtet man eine Fläche des Bedruckstoffes, insbesondere des Papiers, von 1m² und eine Luftstrecke von 1m oberhalb, so enthält die Luft bei einer absoluten Feuchte von 1,5% eine Wassermenge von etwa 12 g. Solange in einer Ausführungsform der erfindungsgemäßen Vorrichtung die Lichtquelle nicht weiter als 1m vom Bedruckstoff entfernt ist und die absolute Feuchte nicht deutlich über 1,5% liegt, werden die oben angegebenen Absorptionen durch Wasser und/oder Wasserdampf nicht überschritten werden. Eine zusätzliche Absorption kann durch den Feuchtgehalt des Bedruckstoffes stattfinden, falls das Licht durch die Farbschicht hindurch bis in den Bedruckstoff eindringt, oder durch Feuchtmittel, welches durch den Druckprozess auf den Bogen übertragen wurde.

In Abhängigkeit von funktionellen Gruppen der einzelnen Komponenten in der Druckfarbe, insbesondere des Pigmentes, des Farbstoffes oder des Farbmittels, des Bindemittels (Firnis), des Lösemittels, des Öles oder des Harzes, des Füllstoffes, des Hilfsmittels, der Additive oder der Zusatzstoffe, oder dergleichen, kann die Druckfarbe verschiedene Wellenlängen absorbieren. Mittels der erfindungsgemäßen Vorrichtung wird der sich auf dem Bedruckstoff befindlichen Druckfarbe in der Flachdruckmaschine Licht im nahen Infrarot unter Vermeidung von Wasserabsorptionswellenlängen, beispielsweise durch die Einstrahlung nur weniger Wellenlängen einer ein Linienspektrum emittierenden Lichtquelle, angeboten.

In erfinderischer Weise kann die Druckfarbe einen Infrarotabsorberstoff aufweisen. Eine Einkopplung des Lichtes in die Druckfarbe und/oder eine Absorption der Strahlungsenergie in der Druckfarbe wird durch den Infrarotabsorberstoff erzeugt, ermöglicht, unterstützt, verbessert oder erleichtert. Im Zusammenhang dieser Darstellung der Erfindung wird sprachlich vereinfachend nur vom Unterstützen gesprochen, und es sollen damit alle Abstufungen der Wirkung des Infrarotabsorberstoffes gemeint sein. Der Energieeintrag, welcher zur Entstehung von Wärme führen kann, führt zu einer beschleunigten Trocknung der Druckfarbe. Einerseits kann kurzfristig eine hohe Temperatur in der Druckfarbe (in der Farbschicht) auf dem Bedruckstoff erzeugt werden, andererseits können gegebenenfalls in Abhängigkeit der Zusammensetzung der Druckfarbe chemische Reaktionen angeregt oder initiiert werden. Der Infrarotabsorberstoff, auch als Infrarotabsorber, IR-Absorber, IR-Absorbersubstanz oder dergleichen bezeichnet, kann einerseits eine Komponente in der Druckfarbe sein, welche eine funktionelle Gruppe aufweist, welche im nahen Infrarot absorbiert, oder kann andererseits ein Additiv oder ein Zusatzstoff sein, welcher der Druckfarbe vor dem Verdrucken beigegeben oder zugesetzt wird. In anderen Worten ausgedrückt, die Druckfarbe kann mit einem Infrarotabsorberstoff ergänzt worden sein oder eine zu einem Infrarotabsorberstoff modifizierte Komponente umfassen. Bevorzugt hat der Infrarotabsorberstoff dabei die Eigenschaft, dass er nur geringe oder sogar keine Absorption im sichtbaren Bereich von Wellenlängen aufweist, damit der Farbeindruck der Druckfarbe nur wenig oder sogar gar nicht beeinflusst oder geändert wird.

Ein relativ hoher Energieeintrag direkt in die Druckfarbe, insbesondere unterstützt durch einen Infrarotabsorberstoff, ist in vorteilhafter Weise möglich, ohne einen unerwünschten Energieeintrag in den Bedruckstoff zu erhalten. Dies erklärt sich zum einen dadurch, dass das Licht nicht direkt vom Bedruckstoff absorbiert werden kann, und zum anderen dadurch, dass sich die durch die Farbschicht absorbierte Energie nach Bruchteilen von Sekunden auf Farbe und Bedruckstoff verteilt. Die Wärmekapazität und die Mengenverhältnisse sind hierbei so verteilt, dass eine kurze Erhitzung der Farbschicht möglich ist, bevor der gesamte bedruckte Bogen eine homogene moderate Temperaturerhöhung erfährt. Dadurch ist die erforderliche Gesamtenergiezufuhr verringert. Die selektive Energiezufuhr kann insbesondere dadurch unterstützt werden, dass eine Wellenlänge eingestrahlt wird, welche resonant oder quasi-resonant zu Absorptionslinien einer Komponente der Druckfarbe oder zu einer Absorptionslinie oder einem Absorptionsmaximum eines Infrarotabsorberstoffes in der Druckfarbe ist. Die Absorption der Strahlungsenergie in der Druckfarbe beträgt mehr als 30%, bevorzugt 50%, insbesondere 75%, kann sogar mehr als 90% betragen.

Darüber hinaus reduziert eine Vermeidung der Energieabsorption in Wasser die Austrocknung des Bedruckstoffes. Dieses ist vorteilhaft, da unter anderem eine Austrocknung des Bedruckstoffes zu einer Veränderung seines Formates führt: Aufgrund des sogenannten Quellprozesses weist in Abhängigkeit seines Trocknungszustandes beziehungsweise seines Feuchtigkeitsgehaltes der Bedruckstoff unterschiedliche Formate auf. Der Quellvorgang zwischen einzelnen Druckwerken führt zu der Erfordernis unterschiedlicher Druckformformate in den einzelnen Druckwerken. Eine Veränderung des Feuchtigkeitsgehaltes zwischen den Druckwerken aufgrund des Einflusses einer durch Strahlung induzierten Austrocknung, welche zu nur mit großem Aufwand im voraus bestimmbaren und korrigierbaren Abweichungen führt, wird durch die Druckfarbentrocknung mittels der erfindungsgemäßen Vorrichtung vermieden.

In anderen Worten ausgedrückt, ermöglicht die erfindungsgemäße Vorrichtung eine Trocknung der lösemittelhaltigen Druckfarbe auf dem Bedruckstoff, ohne dessen Austrocknung zu stark zu beeinflussen.

Um eine möglichst schmalbandige Emission bei gleichzeitig hoher spektraler Leistungsdichte zu erreichen, ist die Strahlungsenergiequelle ein Laser. Bevorzugt für die räumliche Integration innerhalb der Flachdruckmaschine ist der Laser ein Halbleiterlaser, (Diodenlaser) oder ein Festkörperlaser (Titan-Saphir, Erbium-Glas, NdYAG, Nd-Glas oder dergleichen). Ein Festkörperlaser kann bevorzugt durch Diodenlaser optisch gepumpt sein. Der Festkörperlaser kann auch ein Fiberlaser oder Lichtwellenleiterlaser sein, bevorzugt ein Ytterbium Fiberlaser, welche 300 bis 700 W Lichtleistung am Arbeitsplatz bei 1070 nm bis 1100 nm zur Verfügung stellen können. In vorteilhafter Weise können derartige Laser in begrenztem Umfang auch abstimmbar sein. In anderen Worten ausgedrückt, die Ausgangswellenlänge der Laser ist veränderbar. Dadurch kann eine Abstimmung auf eine gewünschte Wellenlänge, beispielsweise in Resonanz oder Quasi-Resonanz zu einer Absorptionswellenlänge einer Komponente in der Druckfarbe, insbesondere zu einem Infrarotabsorberstoff in der Druckfarbe, erreicht werden.

Diodenlaser oder Halbleiterlaser sind im Zusammenhang der erfindungsgemäßen Vorrichtung besonders vorteilhaft, da sie bereits ohne besondere Strahlformungsoptik für den Zweck der Strahlungsenergiezufuhr auf einen Bedruckstoff eingesetzt werden können. Das den Resonator eines Halbleiterlasers verlassene Licht ist stark divergent, so dass ein sich mit zunehmendem Abstand vom Auskoppelspiegel ausweitendes Lichtbündel erzeugt wird.

In einer vorteilhaften Weiterbildung weist die Vorrichtung zur Zuführung von Strahlungsenergie eine Mehrzahl von Strahlungsenergiequellen auf, die in einem eindimensionalen, in einem zweidimensionalen Feld (lokal gekrümmt, global gekrümmt oder flach) oder in einem dreidimensionalen Feld angeordnet sind und deren Licht an einer Anzahl von Positionen auf den Bedruckstoff trifft. Durch die Verwendung einer Anzahl von einzelnen Strahlungsenergiequellen für einzelne Bereiche auf dem Bedruckstoff wird die maximal erforderliche Ausgangsleistung der Strahlungsenergiequellen abgesenkt. Lichtquellen mit geringerer Ausgangsleistung sind in der Regel kostengünstiger und haben eine längere Lebenserwartung. Darüber hinaus wird eine unnötig hohe Verlustwärmeentwicklung vermieden. Die durch die Zuführung von Strahlungsenergie eingetragene Energie pro Fläche liegt zwischen 100 und 10.000 mJ/cm², bevorzugt zwischen 100 und 1000 mJ/cm², insbesondere zwischen 200 und 500 mJ/cm². Die Bestrahlung des Bedruckstoffes findet für eine Zeitdauer einer Länge zwischen 0,5 ms und 1s, bevorzugt zwischen 1 ms und 50 ms, insbesondere zwischen 5 ms und 25 ms statt.

Es ist besonders vorteilhaft, wenn das auf den Bedruckstoff an einer Position auftreffende Licht in seiner Intensität und Belichtungsdauer für jede Strahlungsenergiequelle unabhängig von den anderen Strahlungsenergiequellen steuerbar ist. Für diesen Zweck kann eine Steuerungseinheit, unabhängig von oder integriert in die Maschinensteuerung der Flachdruckmaschine, vorgesehen sein. Durch eine Steuerung der Strahlungsenergiequellenparameter ist es möglich, die Energiezufuhr an unterschiedlichen Positionen des Bedruckstoffes zu regulieren. Eine Energiezufuhr kann dann der Bedeckung des Bedruckstoffes an der vorliegenden Position auf dem Bedruckstoffes angepasst werden. Es ist darüber hinaus auch vorteilhaft, die erfindungsgemäße Vorrichtung mit einer Mehrzahl von Strahlungsenergiequellen derart einzurichten, dass an einer Position auf dem Bedruckstoff Licht von wenigstens zwei Strahlungsenergiequellen auftrifft. Dabei kann es sich einerseits um teilweise andererseits um vollständig überlappende Lichtstrahlbündel handeln. Die erforderliche maximale Ausgangsleistung einer einzelnen Strahlungsenergiequelle ist dann geringer, darüber existiert eine Redundanz falls ein Ausfall einer Strahlungsenergiequelle auftritt.

Eine erfindungsgemäße Flachdruckmaschine mit wenigstens einem Druckwerk zeichnet sich dadurch aus, dass sie eine erfindungsgemäße Vorrichtung zur Zuführung von Strahlungsenergie aufweist. Die erfindungsgemäße Flachdruckmaschine kann eine direkte oder indirekten Offsetdruckmaschine, eine Flexodruckmaschine oder dergleichen sein. Einerseits kann die Position, an der das Licht auf den Bedruckstoff im Pfad durch die Flachdruckmaschine trifft, dem letzten Druckspalt des letzten Druckwerkes der Anzahl von Druckwerken, also allen Druckspalten, nachgeordnet sein. Anderseits kann die Position auch einem ersten Druckspalt nachgeordnet und einem zweiten Druckspalt vorgeordnet, also wenigstens zwischen zwei Druckwerken, sein.

Im Zusammenhang des erfinderischen Gedankens steht auch ein Verfahren zum Zuführen von Strahlungsenergie einer Wellenlänge im nahen Infrarot auf einen Bedruckstoff in einer Flachdruckmaschine, genauer zum Zuführen in die Druckfarbe auf dem Bedruckstoff. Im erfindungsgemäßen Verfahren wird ein Bedruckstoff mit Licht von wenigstens einer Strahlungsenergiequelle beleuchtet, wobei das Licht auf den Bedruckstoff auf dem Pfad des Bedruckstoffes durch die Druckmaschine an einer Position trifft, welche wenigstens einem Druckspalt in einem Druckwerk nachgeordnet ist. Bei dem Verfahren wird eine, wie in diesem Dokument beschriebene Vorrichtung zur Zuführung von Strahlungsenergie eingesetzt, wobei
eine Strahlungsenergiequelle der Vorrichtung im wesentlichen nur Licht emittiert, dessen Wellenlänge nicht-resonant zu Absorptionswellenlängen von Wasser (H20) ist. Damit die Absorption der Strahlungsenergie in der Druckfarbe unterstützt oder ermöglicht wird, wird der Druckfarbe wenigstens ein Infrarotabsorberstoff beigegeben. Anders ausgedrückt, die Absorption der Strahlungsenergie in der Druckfarbe wird durch einen Infrarotabsorberstoff unterstützt, welcher der Druckfarbe beigegeben ist. Die Infrarotabsorberstoffe können für eine Absorption bei einer bestimmten Wellenlänge, welche zu einer Wellenlänge einer Lichtquelle, insbesondere Laser, passt, maßgeschneidert synthetisiert sein. Für einen vorliegenden Infrarotabsorberstoff mit einer Absorption bei einer bestimmten Wellenlänge können spezielle Lichtquellen, insbesondere Laser, welche bei dieser bestimmten Wellenlänge emittierten, entwickelt werden. Schließlich ist vorgesehen, dass das von der Strahlungsquelle emittierte Licht im wesentlichen resonant zu einem Absorptionsmaxium des Infrarotabsorberstoffs ist.

Insbesondere werden in erfinderischer Weise die Emission der Strahlungsenergiequelle und die Absorption des Infrarotabsorberstoffes zueinander passend festgelegt oder eingestellt oder vorgesehen. In anderen Worten, die Strahlungsenergiequelle soll eine der Absorption des Infrarotabsorberstoffes entsprechende Wellenlänge emittieren. Das von der Strahlungsquelle emittierte Licht ist also besonders bevorzugt quasi-resonant, im wesentlichen resonant, insbesondere resonant zu einem Absorptionsmaxium des Infrarotabsorberstoffs, so dass eine möglichst gute Übereinstimmung des Absorptionsmaximums des Infrarotabsorberstoffes mit dem Emissionsmaximum der Strahlungsquelle erzielt wird. Das Absorptionsspektrum des verwendeten Infrarotabsorberstoffes weist im Bereich der Emission der Strahlungsquelle wenigstens 50% des Absorptionsmaximums des Infrarotabsorberstoffes auf, bevorzugt wenigstens 75%, insbesondere wenigstens 90%. Ein Infrarotabsorberstoff kann ein oder mehrere lokale Absorptionsmaxima aufweisen.

Das erfindungsgemäße Verfahren zum Zuführen von Strahlungsenergie kann auch als ein Verfahren zum Trocknen von Druckfarbe oder als ein Verfahren zum Unterstützen oder zum Beschleunigen des Trocknens von Druckfarbe bezeichnet werden, da mittels der Absorption des Infrarotabsorberstoffes und unter Vermeidung von Absorptionswellenlängen von Wasser eine starke Energieabsorption in der Druckfarbe bei gleichzeitiger geringer, bevorzugt verschwindend geringer Energieabsorption im Bedruckstoff erreicht wird. Anders gesagt, ermöglicht das erfindungsgemäße Verfahren eine Trocknung der lösemittelhaltigen Druckfarbe auf dem Bedruckstoff, ohne dessen Austrocknung zu stark zu beeinflussen.

Das erfindungsgemäße Verfahren zum Zuführen von Strahlungsenergie kann mit besonderem Vorteil in einer Flachdruckmaschine mit einer Anzahl von Druckwerken, in denen eine Anzahl von Druckfarben verdruckt werden, durchgeführt werden. Wenigstens eine der Anzahl von Druckfarben wird mit einem Infrarotabsorberstoff vor dem Verdrucken präpariert. Die Präparation kann vor der Aufnahme der Druckfarbe im Druckwerk oder innerhalb des Druckwerks erfolgen, beispielsweise kann eine bestimmte Menge eines Infrarotabsorberstoffes wenigstens einer der Anzahl von Druckfarben beigemengt oder beigemischt werden. Der Gewichtsanteil des Infrarotabsorberstoffes kann kleiner als 10%, bevorzugt kleiner als 3%, insbesondere kleiner als 1% des Gesamtgewichtes der Druckfarbe (mit Infrarotabsorberstoff) sein. Wenn wenigstens zwei der Anzahl von Druckfarben präpariert werden, kann für beide Druckfarben derselbe Infrarotabsorberstoff oder für die erste der beiden Druckfarben ein erster Infrarotabsorberstoff und für die zweite der beiden Druckfarben ein zweiter Infrarotabsorberstoff eingesetzt werden. Der erste und der zweite Infrarotabsorberstoff können wenigstens ein gleiches oder ein ähnliches Absorptionsmaximum oder verschiedene Absorptionsmaxima aufweisen. Entsprechendes gilt für mehr als zwei Infrarotabsorberstoffe. Wenn die verwendeten Infrarotabsorberstoffe eine Anzahl von verschiedenen Absorptionsmaxima aufweisen, können eine Anzahl von Wellenlängen an Strahlungsenergie zugeführt werden.

Weitere Vorteile und vorteilhafte Ausführungsformen und Weiterbildungen der Erfindung werden anhand der nachfolgenden Figuren sowie deren Beschreibungen dargestellt. Es zeigt im Einzelnen:
- Figur 1: eine schematische Darstellung zur Erläuterung der Anordnung der erfindungsgemäßen Vorrichtung in einer Flachdruckmaschine,
- Figur 2: eine schematische Darstellung einer vorteilhaften Weiterbildung der erfindungsgemäßen Vorrichtung in einer Flachdruckmaschine, und
- Figur 3: eine schematische Darstellung einer Flachdruckmaschine mit diversen alternativen Anordnungen der erfindungsgemäßen Vorrichtung an den Druckwerken bzw. nach dem letzten Druckwerk.

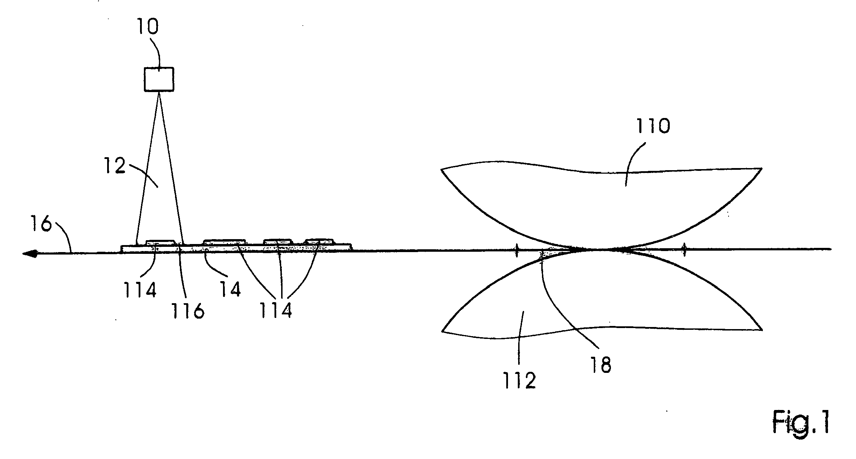

Die Figur 1 zeigt eine schematische Darstellung zur Erläuterung der Anordnung der erfindungsgemäßen Vorrichtung in einer Flachdruckmaschine. Eine Strahlungsenergiequelle 10, insbesondere ein Laser, bevorzugt ein Diodenlaser oder Festkörperlaser ist innerhalb einer Flachdruckmaschine derart angeordnet, dass das von ihr emittierte Licht 12 auf einen Bedruckstoff 14 auf dessen Pfad 16 durch die Flachdruckmaschine an einer Position 116 auftrifft, welche einem Druckspalt 18 nachgeordnet ist. Während in der Figur 1 der Bedruckstoff 14 beispielhaft bogenförmig gezeigt ist, kann der Bedruckstoff auch bahnförmig durch die Flachdruckmaschine geführt sein. Die Orientierung des Pfades 16 des Bedruckstoffes 14 ist durch einen Pfeil gekennzeichnet. Der Pfad ist hier ohne Einschränkung eines im allgemeinen kurvenförmigen oder nichtlinearen Verlaufs, insbesondere auf einem Kreisbogen, linear gezeigt. Der Druckspalt 18 ist in der in Figur 1 gezeigten Ausführungsform durch die Zusammenwirkung des Druckzylinders 110 und eines Gegendruckzylinders 112 definiert. In Abhängigkeit des speziellen Druckverfahrens in der Flachdruckmaschine kann der Druckzylinder 110 ein Druckformzylinder oder ein Gummituchzylinder sein. Auf dem Bedruckstoff 14 ist Druckfarbe 114 gezeigt. Das von der Strahlungsquelle 10 ausgesendete Licht 12 fällt bündelförmig oder teppichförmig an einer Position 116 auf den Bedruckstoff 14. Druckfarbe 114 innerhalb dieser Position 116 kann Energie aus dem Licht 12 absorbieren. Durch die erfindungsgemäße vorteilhafte Wahl einer Wellenlänge, welche nicht-resonant zu Absorptionswellenlängen von Wasser ist, wird eine Absorption im Bedruckstoff 14 reduziert.

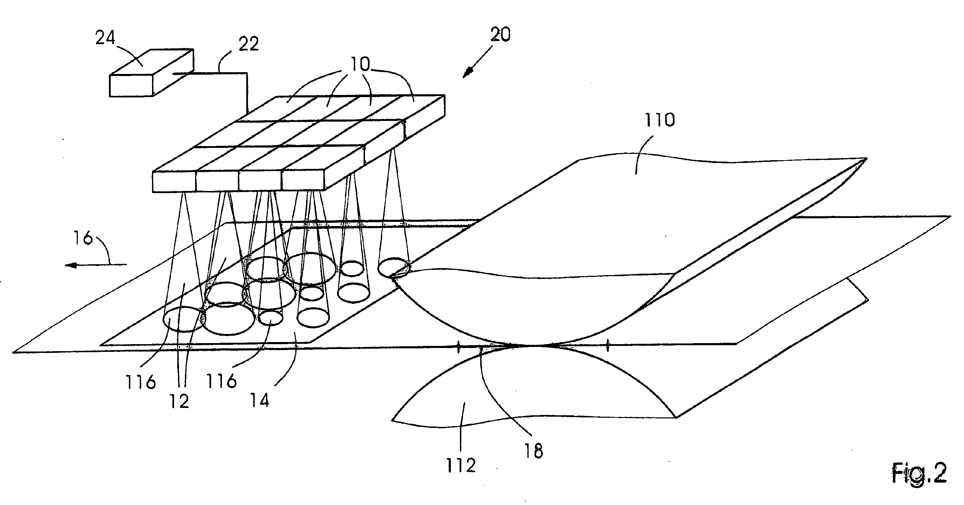

Die Figur 2 ist eine schematische Darstellung einer Ausführungsform in vorteilhafter Weiterbildung der erfindungsgemäßen Vorrichtung in einer Flachdruckmaschine. Es ist beispielhaft ein Feld 20 von Strahlungsenergiequellen 10 skizziert, hier drei mal vier, also zwölf Strahlungsenergiequellen 10. Neben dem hier gezeigten zweidimensionalen Feld 20 kann auch ein eindimensionales Feld oder eine eindimensionale Zeile, orientiert über die Breite des Bedruckstoffes 14 vorgesehen sein. Ein zweidimensionales Feld, wie auch ein dreidimensionales Feld, dessen Licht in zweidimensionaler Verteilung auf den Bedruckstoff 14 trifft, hat unter anderem den Vorteil, dass eine schnelle Trocknung durch parallele oder simultane Bestrahlung einer Gruppe von Positionen in einer Spalte des Feldes 20 erzielt wird. Die Geschwindigkeit, mit welcher sich der Bedruckstoff an den Strahlungsenergiequellen 10 vorbeibewegt, kann folglich höher sein, als im Fall eines nur eindimensionalen Feldes. Das Feld 20 kann auch eine andere Anzahl von Strahlungsenergiequellen 10 aufweisen. Von jeder der Anzahl von Strahlungsenergiequellen 10 wird Licht 12 auf den Bedruckstoff 14 zugeführt. Die Positionen 116, an denen das Licht 12 auf den Bedruckstoff 14, welcher einem Pfad 16 durch die Flachdruckmaschine folgt, trifft, sind einem Druckspalt 118, definiert durch einen Druckzylinder 110 und einen Gegendruckzylinder 112, nachgeordnet. Einzelne Positionen 116 können dabei teilweise zusammenfallen, wie es in der Figur 2 für die vorne liegende Zeile von Strahlungsenergiequellen 10 gezeigt ist, oder sich sogar im wesentlichen vollständig überlappen. Dem Feld 20 von Strahlungsenergiequellen 10 ist eine Steuerungseinrichtung 24 zugeordnet, mit der jenes mittels einer Verbindung 22 Steuersignale austauschen kann. Durch die Steuerungseinrichtung 24 kann eine Ansteuerung des Feldes 20 derart durchgeführt werden, dass eine Energiezufuhr entsprechend der Druckfarbmenge an der Position 116 auf dem Bedruckstoff 14 durchgeführt wird.

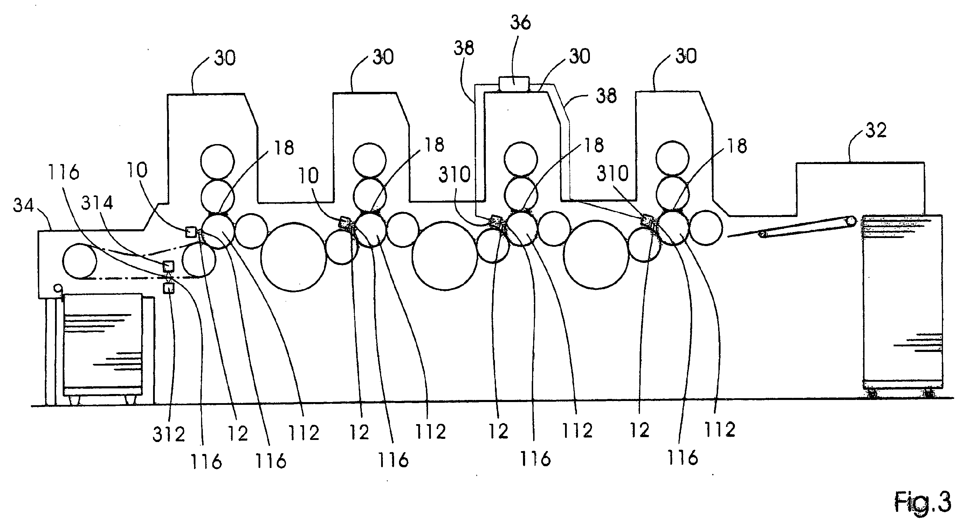

Die Figur 3 stellt schematisch eine Flachdruckmaschine, in dieser Ausführungsform eine bogenverarbeitende Druckmaschine, mit diversen alternativen Anordnungen der erfindungsgemäßen Vorrichtung an den Druckwerken bzw. nach dem letzten Druckwerk dar. Beispielhaft weist die Flachdruckmaschine vier Druckwerke 30, einen Anleger 32 und einen Ausleger 34 auf. Innerhalb der Flachdruckmaschine sind diverse Zylinder gezeigt, welche einerseits zur Bogenführung durch die Maschine dienen, andererseits eine Flachdruckfläche zur Verfügung stellen, sei es direkt als Druckformzylinder oder als ein Gummituchzylinder. Nicht näher im Detail gezeigt, weisen typische Druckwerke 30 in Flachdruckmaschinen des weiteren ein Farbwerk und gegebenenfalls ein Feuchtwerk auf. Jedes Druckwerk 30 umfasst einen Druckzylinder 110 und einen Gegendruckzylinder 112, welche einen Druckspalt 18 definieren. Am ersten und zweiten Druckwerk 30 ist eine zentrale Strahlungsenergiequelle 36 gezeigt, von der ausgehend Licht mittels Lichtleitelementen 38, beispielsweise Lichtwellenleitern, Spiegeln, Abbildungsoptiken und dergleichen, zu den Druckwerken 30 zugeordneten Projektionselementen 310 geführt wird. Die Projektionselemente 310 senden Licht 12 an Positionen 116 auf den Pfad 16 des Bedruckstoffes 14 durch die Flachdruckmaschine aus, welche den jeweiligen Druckspalten 18 der zugeordneten Druckwerke 30 nachgeordnet sind. Durch die Verwendung von Lichtleitelementen 38 ist es möglich, die Strahlungsenergiequelle 36 an einer geeigneten Stelle innerhalb der Flachdruckmaschine anzuordnen, an der Bauraum zur Verfügung steht. Am dritten und vierten Druckwerk 30 sind Strahlungsenergiequellen 10 gezeigt, von denen ausgehend Licht 12 direkt in Positionen 116 dem Druckspalt 18 des jeweiligen Druckwerks 30 nachgeordnet auf den Pfad 16 des Bedruckstoffes 14 zugeführt wird. Des weiteren sind innerhalb des Auslegers 34 eine alternative Strahlungsenergiequelle 312 und eine weitere alternative Strahlungsenergiequelle 314 gezeigt.

Den anhand einer bogenverarbeitenden Druckmaschine in Figur 3 gezeigten Anordnungen analog können erfindungsgemäße Vorrichtungen zur Zuführung von Strahlungsenergie auch in einer bahnverarbeitenden Druckmaschine, insbesondere sogenannten Rollenrotationsdruckmaschinen, sei es für den Akzidenz- oder den Zeitungsdruck, in vorteilhafter Weise eingesetzt werden.

In einer Ausführungsform des erfindungsgemäßen Verfahrens zum Zuführen von Strahlungsenergie einer Wellenlänge im nahen Infrarot auf einen Bedruckstoff wird ein Infrarotabsorberstoff, welcher durch die Lage seines Absorptionsmaximums oder seiner Absorptionsmaxima im sogenannten Fenster des Papierabsorptionsspektrum, insbesondere im sogenannten Fenster des Wasserabsorptionsspektrums, geeignet ist, eingesetzt. Eine benötigte Menge des Infrarotabsorberstoffes wird als Additiv oder Zusatzstoff der Druckfarbe beigegeben. Dieses kann beispielsweise durch Verrühren der Druckfarbe mit dem Infrarotabsorberstoff außerhalb oder innerhalb der Flachdruckmaschine geschehen. Eine Zugabe ist in der Regel nur für die sogenannten Buntfarben, insbesondere für den Vierfarben-Offsetdruck für die Farben Yellow, Magenta und Cyan (Y,M und C), sinnvoll. Eine Zugabe für die Kontrastfarbe, im Vierfarben-Offsetdruck für die Farbe Black (K), ist in der Regel nicht notwendig, da schwarze Druckfarbe in der Regel im gesamten relevanten relevanten und angesprochenen Wellenlängenbereich zwischen 700 nm und 2500 nm ausreichend gut absorbiert. Eine Zugabe kann aber dennoch vorgenommen werden. Die benötigte Menge des Infrarotabsorberstoffes berechnet sich nach dem Lambert-Beerschen Extinktionsgesetz, der Schichtdicke der Druckfarbe auf dem Bedruckstoff und dem Extinktionskoeffizienten. Die auf dem Lambert-Beerschen Extinktionsgesetz Berechnungen basieren in dieser Darstellung auf unmittelbarer Resonanz, d. h. die Emissionswellenlänge liegt in unmittelbarer Nähe des Absorptionsmaximums. Bei leicht abweichenden Laserwellenlängen erhält man eine ebenso leicht abweichende Absorption und benötigt entsprechend, bevorzugt proportional mehr Infrarotabsorberstoff. Zur Beleuchtung des Bedruckstoffes wird eine Strahlungsenergiequelle verwendet, deren Licht im wesentlichen resonant zum Absorptionsmaximum des Infrarotabsorberstoffes ist. Der Druckprozess in der Flachdruckmaschine kann in dieser Ausführungsform ohne weitere Maßnahmen und ohne Abweichungen vom herkömmlichen Druckverfahren durchgeführt werden.

In einem ersten Ausführungsbeispiel der Ausführungsform des erfindungsgemäßen Verfahrens wird als Infrarotabsorberstoff 3-Butyl-2(2-[-2-(3-butyl-1.1-dimethyl-1,3-dihydro-benzo[e]indol-2-y-lidene)ethylidene]-2-chloro-cyclohex-1-enyl]-ethenyl)-1,1-dimethyl-1H-benzo[e]indolium Perchlorat mit der Summenformel C₄₆H₅₂Cl₂N₂O₄ und einem Molekulargewicht von 767,84 g mol⁻¹ verwendet. Die Strukturformel des Infrarotabsorberstoffs ist mit 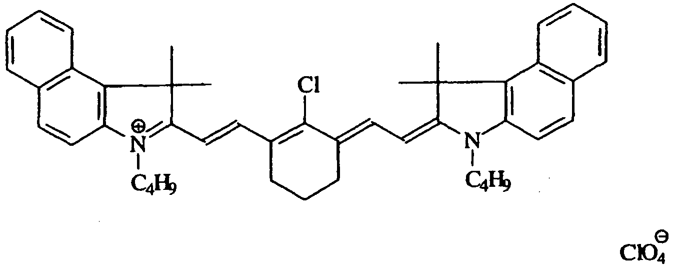 angegeben. Dieser Infrarotabsorberstoff hat ein Absorptionsmaximum bei 819 nm und eine max. Extinktion von 615276 (mol * cm)⁻¹. 1,4 Gewichtsprozent des Infrarotabsorberstoffes werden für circa 90% Laserlichtabsorption als Additiv in den Farben C, M und Y für eine Schichtdicke von 2 um benötigt (nach Lambert-Beer-Extinktionsgesetz). (Zum Vergleich: 0,9 Gewichtsprozent für circa 75%, 0,4 Gewichtsprozent für circa 50% und 0,2 Gewichtsprozent für circa 30%.) Die Vorrichtung zum Zuführen von Strahlungsenergie umfasst als Strahlungsenergiequelle einen Laser, welcher bei 808 nm emittiert, beispielsweise kann ein InGa(Al)As Quantum Well Laser der MB Serie von DILAS verwendet werden. Der genannte Laser von DILAS hat eine maximale optische Ausgangsleistung von 24 W. Die Strahlgeometrie nach dem Kollimator ist 4 mm x 12 mm. Die Emissionswellenlänge ist damit hinreichend resonant zum Absorptionsmaximum von 819±15 nm; der Infrarotabsorberstoff zeigt eine Absorption größer als 50%. Bei diesem Ausführungsbeispiel ist bei einer Druckgeschwindigkeit von 2 m/s (entspricht 14400 Druck pro Stunde bei 50 cm Bogenlänge) ein Strahlprofil und eine Bestrahlungszeit von 2 ms für eine Energie pro Fläche von 100 mJ/cm² gewählt worden. Die Absorption von Strahlung durch Wasserdampf in der Luft liegt unter 0,5%.

In einem zweite Ausführungsbeispiel der Ausführungsform des erfindungsgemäßen Verfahrens wird als Infrarotabsorberstoff 2[2-[2Chloro-3-[2-(3-ethyl-1,3-dihydro-1,1-dimethyl-2H-benzo[e]indol-2ylidene)-ethylidene]-1cyclohexen-1-yl]-ethenyl]3-ethyl-1,1dimethyl-1H-benzo[e]indolium Tetraflouroborat mit der Summenformel C₄₂H₄₄BClF₄N₂ und einem Molekulargewicht von 699,084 g mol⁻¹ verwendet. Die Strukturformel des Infrarotabsorberstoffs ist mit 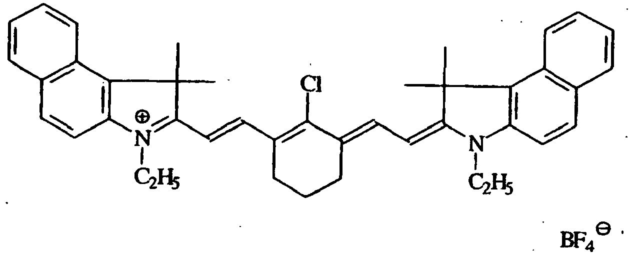 angegeben. Dieser Infrarotabsorberstoff hat ein Absorptionsmaximum bei 816 nm und eine max. Extinktion von 898704 (mol * cm)⁻¹. 0,9 Gewichtsprozent des Infrarotabsorberstoffes werden für circa 90% Laserlichtabsorption als Additiv in den Farben C, M und Y für eine Schichtdicke von 2 µm benötigt (nach Lambert-Beer-Extinktionsgesetz). (Zum Vergleich: 0,5 Gewichtsprozent für circa 75%, 0,3 Gewichtsprozent für circa 50% und 0,1 Gewichtsprozent für circa 30%.) Die Vorrichtung zum Zuführen von Strahlungsenergie umfasst als Strahlungsenergiequelle einen Laser, welcher bei 808 nm emittiert, beispielsweise kann ein Diodenlaser HLU 100c 10x12 von LIMO verwendet werden. Der genannte Laser von LIMO hat eine maximale optische Ausgangsleistung von 100 W. Die Strahlgeometrie nach dem Kollimator ist 10 mm x 12 mm. Die Emissionswellenlänge ist damit hinreichend resonant zum Absorptionsmaximum von 816±15 nm; der Infrarotabsorberstoff zeigt eine Absorption größer als 50%. Bei diesem Ausführungsbeispiel ist bei einer Druckgeschwindigkeit von 0,5 m/s (entspricht 3600 Druck pro Stunde bei 50 cm Bogenlänge) ein Strahlprofil und eine Bestrahlungszeit von 40 ms für eine Energie pro Fläche von 833 mJ/cm² gewählt worden. Die Absorption von Strahlung durch Wasserdampf in der Luft liegt unter 0,5%.

In einem dritten Ausführungsbeispiel der Ausführungsform des erfindungsgemäßen Verfahrens wird als Infrarotabsorberstoff Benzenaminium-N,N'-2,5-cyclohexadiene-1,4-diylidenebis[4-(dibutylamino)-N-[4-(dibutylamino)phenyl] Diperchlorat mit der Summenformel C₆₂H₉₂Cl₂N₆O₈ und einem Molekulargewicht von 1120,37 g mol⁻¹ verwendet. Die Strukturformel des Infrarotabsorberstoffs ist mit 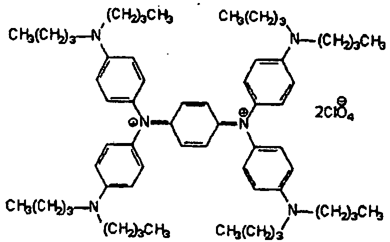 angegeben. Dieser Infrarotabsorberstoff hat ein Absorptionsmaximum bei 1064 nm und eine max. Extinktion von 81300 (mol * cm)⁻¹. 4,8 Gewichtsprozent des Infrarotabsorberstoffes werden für circa 50% Laserlichtabsorption als Additiv in den Farben C, M und Y für eine Schichtdicke von 2 µm benötigt (nach Lambert-Beer-Extinktionsgesetz). (Zum Vergleich: 15,9 Gewichtsprozent für circa 90%, 9,6 Gewichtsprozent für circa 75% und 2,5 Gewichtsprozent für circa 30%.) Die Vorrichtung zum Zuführen von Strahlungsenergie umfasst als Strahlungsenergiequelle einen Laser, welcher bei 1075 nm emittiert, beispielsweise kann ein Ytterbium Fiber Laser YLR-100 von IPG Photonics verwendet werden. Der genannte Laser von IPG Photonics hat eine maximale optische Ausgangsleistung von 100 W. Die Strahlgeometrie im Fokus kann 3 mm x 3 mm betragen. Die Emissionswellenlänge ist damit hinreichend resonant zum Absorptionsmaximum von 1064±15 nm; der Infrarotabsorberstoff zeigt eine Absorption größer als 50%. Bei diesem Ausführungsbeispiel ist bei einer Druckgeschwindigkeit von 2 m/s (entspricht 14400 Druck pro Stunde bei 50 cm Bogenlänge) ein Strahlprofil und eine Bestrahlungszeit von 5 ms und eine Energie pro Fläche von 417 mJ/cm² gewählt worden. Die Absorption von Strahlung durch Wasserdampf in der Luft liegt unter 0,1%.

In einem vierten Ausführungsbeispiel der Ausführungsform des erfindungsgemäßen Verfahrens wird als Infrarotabsorberstoff Bis(3,4-dimethoxy-2'chlorodithiobenzil)Nickel mit der Summenformel C₃₂H₂₆Cl₂NiO₄S₄ und einem Molekulargewicht von 732,4 g mol⁻¹ verwendet. Die Strukturformel des Infrarotabsorberstoffs ist mit 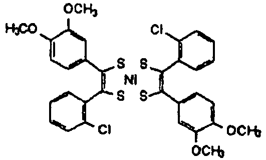 angegeben. Dieser Infrarotabsorberstoff hat ein Absorptionsmaximum bei 885 nm und eine max. Extinktion von 160000 (mol * cm)⁻¹. 3,2 Gewichtsprozent des Infrarotabsorberstoffes werden für circa 75% Laserlichtabsorption als Additiv in den Farben C, M und Y für eine Schichtdicke von 2 um benötigt (nach Lambert-Beer-Extinktionsgesetz). (Zum Vergleich: 5,3 Gewichtsprozent für circa 90%, 1,6 Gewichtsprozent für circa 50% und 0,8 Gewichtsprozent für circa 30%.) Die Vorrichtung zum Zuführen von Strahlungsenergie umfasst als Strahlungsenergiequelle einen Laser, welcher bei 870 nm emittiert, beispielsweise kann ein fasergekoppeltes Laserdiodensystem DLDFC-50 von Laser2000 verwendet werden. Der genannte Laser von Laser2000 hat eine maximale optische Ausgangsleistung von 50 W und kann im cw-Betrieb oder Pulsbetrieb eingesetzt werden. Die Emissionswellenlänge ist damit hinreichend resonant zum Absorptionsmaximum von 885±15 nm; der Infrarotabsorberstoff zeigt eine Absorption größer als 50%. Bei diesem Ausführungsbeispiel ist bei einer Druckgeschwindigkeit von 2 m/s (entspricht 14400 Druck pro Stunde bei 50 cm Bogenlänge) ein Strahlprofil und eine Bestrahlungszeit von 5 ms für eine Energie pro Fläche von 152 mJ/cm² gewählt worden. Die Absorption von Strahlung durch Wasserdampf in der Luft liegt unter 0,1%.

### BEZUGSZEICHENLISTE

- 10: Strahlungsenergiequelle
- 12: Licht
- 14: Bedruckstoff
- 16: Pfad des Bedruckstoffes
- 18: Druckspalt
- 110: Druckzylinder
- 112: Gegendruckzylinder
- 114: Druckfarbe
- 116: Position auf dem Bedruckstoff
- 20: Feld von Strahlungsenergiequellen
- 22: Verbindung zur Übertragung von Steuersignalen
- 24: Steuerungseinheit
- 30: Druckwerk
- 32: Anleger
- 34: Ausleger
- 36: zentrale Strahlungsenergiequelle
- 38: Lichtleitelement
- 310: Projektionselement
- 312: alternative Strahlungsenergiequelle
- 314: weitere alternative Strahlungsenergiequelle

## Patentansprüche

1. Vorrichtung zur Zuführung von Strahlungsenergie einer Wellenlänge im nahen Infrarot auf einen Bedruckstoff (14) in einer Flachdruckmaschine mit wenigstens einer Strahlungsenergiequelle (10), deren Licht (12) auf den Bedruckstoff (14) auf dem Pfad (16) des Bedruckstoffes (14) durch die Druckmaschine an einer Position (116) trifft, welche wenigstens einem Druckspalt (18) in einem Druckwerk nachgeordnet ist,
**dadurch gekennzeichnet,**
**dass** die Strahlungsenergiequelle (10) im wesentlichen nur Licht (12) emittiert, dessen Wellenlänge nicht-resonant zu Absorptionswellenlängen von Wasser (H₂O) ist,
**dass** die Strahlungsenergiequelle (10) schmalbandig Licht (12) emittiert, dessen Wellenlänge zwischen 700,00 nm und 2500,00 nm liegt, und
**dass** die Strahlungsenergiequelle (10) ein Laser ist.

2. Vorrichtung zur Zuführung von Strahlungsenergie gemäß Anspruch 1,
**dadurch gekennzeichnet,**
**dass** der Laser ein Halbleiterlaser oder ein Festkörperlaser ist.

3. Vorrichtung zur Zuführung von Strahlungsenergie gemäß einem der vorstehenden Ansprüche,
**dadurch gekennzeichnet,**
**dass** die Vorrichtung eine Mehrzahl von Strahlungsenergiequellen (10) aufweist, die in einem eindimensionalen Feld, einem zweidimensionalen Feld (20) oder einem dreidimensionalen Feld angeordnet sind und deren Licht an einer Anzahl von Positionen (116) auf den Bedruckstoff (14) trifft.

4. Vorrichtung zur Zuführung von Strahlungsenergie gemäß einem der vorstehenden Ansprüche, welcher zusätzlich eine Steuerungseinheit (24) zugeordnet ist,
**dadurch gekennzeichnet,**
**dass** das auf den Bedruckstoff (14) an einer Position (116) auftreffende Licht (12) in seiner Intensität und Belichtungsdauer für jede Strahlungsenergiequelle (10) unabhängig von den anderen Strahlungsenergiequellen (10) steuerbar ist.

5. Vorrichtung zur Zuführung von Strahlungsenergie gemäß einem der vorstehenden Ansprüche,
**dadurch gekennzeichnet,**
**dass** die Wellenlänge 870,00 nm ± 50,00 nm und/oder 1050,00 nm ± 50,00 nm und/oder 1250,00 nm ± 50,00 nm und/oder 1600,00 nm ± 50,00 nm ist.

6. Vorrichtung zur Zuführung von Strahlungsenergie gemäß einem der vorstehenden Ansprüche,
**dadurch gekennzeichnet,**
**dass** an einer Position (116) auf dem Bedruckstoff (14) Licht (12) von wenigstens zwei Strahlungsenergiequellen (10) auftrifft.

7. Vorrichtung zur Zuführung von Strahlungsenergie gemäß einem der vorstehenden Ansprüche, wobei die Flachdruckmaschine wenigstens zwei Druckwerke (30) aufweist,
**dadurch gekennzeichnet,**
**dass** die Position (116), an der das Licht auf den Bedruckstoff (14) im Pfad (16) durch die Flachdruckmaschine trifft, dem letzten Druckspalt (18) des letzten Druckwerkes (30) der Anzahl von Druckwerken nachgeordnet ist.

8. Flachdruckmaschine mit wenigstens einem Druckwerk (30),
**gekennzeichnet durch**
eine Vorrichtung zur Zuführung von Strahlungsenergie gemäß einem der vorstehenden Ansprüche.

9. Verfahren zum Zuführen von Strahlungsenergie einer Wellenlänge im nahen Infrarot auf einen Bedruckstoff (14) in einer Flachdruckmaschine, durch Beleuchten des Bedruckstoffes (14) mit Licht (12) von wenigstens einer Strahlungsenergiequelle (10), wobei das Licht (12) auf den Bedruckstoff (14) auf dem Pfad (16) des Bedruckstoffes (14) durch die Druckmaschine an einer Position (116) trifft, welche wenigstens einem Druckspalt (18) in einem Druckwerk nachgeordnet ist,
**gekennzeichnet durch**
Einsetzen einer Vorrichtung zur Zuführung von Strahlungsenergie gemäß einem der Ansprüche 1 bis 8, und
dass eine Strahlungsenergiequelle (10) der Vorrichtung im wesentlichen nur Licht (12) emittiert, dessen Wellenlänge nicht-resonant zu Absorptionswellenlängen von Wasser (H₂O) ist,
sowie
Unterstützen der Absorption der Strahlungsenergie in der Druckfarbe **durch** wenigstens einen Infrarotabsorberstoff, welcher der Druckfarbe beigegeben ist, und **dass** das von der Strahlungsquelle (10) emittierte Licht im wesentlichen resonant zu einem Absorptionsmaxium des Infrarotabsorberstoffs ist.

10. Verfahren zum Zuführen von Strahlungsenergie gemäß Anspruch 9,
**dadurch gekennzeichnet,**
**dass** der Infrarotabsorberstoff einer der folgenden Stoffe ist: Benzenaminium-N,N'-2,5-cyclohexadiene-1,4-diylidenebis[4-(dibutylamino)-N-[4-(dibutylamino)phenyl] Diperchlorat, Bis(3,4-dimethoxy-2'chlorodithiobenzil)Nickel, 3-Butyl-2(2-[-2-(3-butyl-1.1-dimethyl-1,3-dihydro-benzo[e]indol-2-y-lidene)ethylidene]-2-chloro-cyclohex-1-enyl]-ethenyl)-1,1-dimethyl-1H-benzo[e]indolium Perchlorat und 2[2-[2Chloro-3-[2-(3-ethyl-1,3-dihydro-1,1-dimethyl-2H-benzo[e]indol-2ylidene)-ethylidene]-1cyclohexen-1-yl]-ethenyl]3-ethyl-1,1dimethyl-1H-benzo[e]indolium Tetraflouroborat.

11. Verfahren zum Zuführen von Strahlungsenergie gemäß Anspruch 9 oder 10, wobei das Verfahren in einer Flachdruckmaschine mit einer Anzahl von Druckwerken (30), in denen eine Anzahl von Druckfarben verdruckt werden, durchgeführt wird,
**gekennzeichnet durch**
Präparieren wenigstens einer der Anzahl von Druckfarben mit einem Infrarotabsorberstoff vor dem Verdrucken der Druckfarben.

## Claims

1. Device for supplying radiation energy of a near infrared wavelength onto a printing material (14) in a lithographic printing press including at least one radiation energy source (10) whose light (12) hits the printing material (14) on the path (16) of the printing material (14) through the printing press in a position (116) downstream of at least one printing nip (18) in a printing unit,
**characterized in**
**that** the radiation energy source (10) emits essentially only light (12) whose wavelength is non-resonant to the absorption wavelengths of water (H₂O),
**that** the radiation energy source (10) emits narrow-band light (12) whose wavelength is between 700.00 nm and 250.00 nm, and
**that** the radiation energy source (10) is a laser.

2. Device for supplying radiation energy according to Claim 1,
**characterized in**
**that** the laser is a semiconductor laser or a solid-state laser.

3. Device for supplying radiation energy according to one of the preceding claims,
**characterized in**
**that** the device includes a plurality of radiation energy sources (10) that are arranged in a one-dimensional field, a two-dimensional field (20) or a three-dimensional field and whose light hits the printing material (14) in a number of positions (116).

4. Device for supplying radiation energy according to one of the preceding claims, with which additionally a control unit (24) is associated,
**characterized in**
**that** the light (12) hitting the printing material (14) in a position (116) is controllable in terms of its intensity and exposure time for each radiation energy source (10) independently of the other radiation energy sources (10).

5. Device for supplying radiation energy according to one of the preceding claims,
**characterized in**
**that** the wavelength is 870.00 nm ± 50.00 nm and/or 1050.00 nm ± 50.00 nm and/or 1250.00 nm ± 50.00 nm and/or 1600.00 nm ± 50.00 nm.

6. Device for supplying radiation energy according to one of the preceding claims,
**characterized in**
**that** light (12) from at least two radiation energy sources (10) hits the printing material (14) in one position (116).

7. Device for supplying radiation energy according to one of the preceding claims, wherein the lithographic printing press includes at least two printing units (30),
**characterized in**
**that** the position (116) in which the light hits the printing material (14) in the path through the lithographic printing press is arranged downstream of the last printing nip (18) of the last printing unit (30) of the number of printing units.

8. Lithographic printing press including at least one printing unit (30),
**characterized by**
a device for supplying radiation energy according to one of the preceding claims.

9. Method of supplying radiation energy of a near infrared wavelength onto a printing material (14) in a lithographic printing press by exposing the printing material (14) to light (12) from at least one radiation energy source (10), wherein the light (12) hits the printing material (14) in the path (16) of the printing material (14) through the printing press in a position (116) located downstream of at least one printing nip (18) in a printing unit,
**characterized by**
using of a device for supplying radiation energy according to one of Claims 1 to 8, and by the fact that a radiation energy source (10) of the device essentially emits only light (12) whose wavelength is non-resonant to absorption wavelengths of water (H₂O), and assisting in the absorption of the radiation energy in the printing ink by means of at least one infrared absorber substance admixed to the printing ink, and
that the light emitted by the radiation source (10) is essentially resonant to an absorption maximum of the infrared absorber substance.

10. Method for supplying radiation energy according to Claim 9,
**characterized in**
**that** the infrared absorber substance is one of the following substances: Benzenaminium-N,N'-2,5-cyclohexadiene-1,4-diylidenebis[4-(dibutylamino)-N-[4-(dibutylamino)phenyl] diperchlorate, Bis(3,4-dimethoxy-2'chlorodithiobenzil)nickel, 3-butyl-2(2-[-2-(3-butyl-1.1-dimethyl-1,3-dihydro-benzo[e]indol-2-y-lidene)ethylidene]-2-chlorocyclohex-1-enyl]-ethenyl)-1,1-dimethyl-1H-benzo[e]indolium perchlorate and 2[2-[2chloro-3-[2-(3-ethyl-1,3-dihydro-1,1-dimethyl-2H-benzo[e]indol-2ylidene)-ethylidene]-1cyclohexen-1-yl]ethenyl]3-ethyl-1,1dimethyl-1H-benzo[e]indolium Tetrafluoroborate.

11. Method for supplying radiation energy according to Claim 9 or 10, wherein the method is implemented in a lithographic printing press including a number of printing units (30) wherein a number of printing inks are applied,
**characterized by**
preparing at least one of the number of printing inks with an infrared absorber substance prior to the application of the printing inks.

## Revendications

1. Dispositif d'alimentation en énergie de rayonnement d'une longueur d'onde dans l'infrarouge proche sur un substrat d'impression (14) dans une machine d'impression à plat ayant au moins une source d'énergie de rayonnement (10) dont la lumière (12) s'applique sur le substrat d'impression (14) sur la trajectoire (16) du substrat d'impression (14) par la machine d'impression à une position (116), laquelle est placée au moins en aval d'un interstice d'impression (18) dans un groupe d'impression,
caractérisé en ce
la source d'énergie de rayonnement (10) n'émet essentiellement que de la lumière (12), dont la longueur d'onde est non résonante par rapport à des longueurs d'onde d'absorption de l'eau (H₂O).

2. Dispositif d'alimentation en énergie de rayonnement selon la revendication 1,
**caractérisé en ce**
**que** le laser est un laser à semi-conducteur ou un laser à solide.

3. Dispositif d'alimentation en énergie de rayonnement selon l'une des revendications précédentes,
**caractérisé en ce**
**que** l'appareil comprend une pluralité de sources de rayonnement d'énergie (10) disposées dans un champ à une dimension, un champ à deux dimensions (20) ou dans un champ en trois dimensions, et dont la lumière est incidente à une pluralité de positions (116) sur le substrat imprimé (14).

4. Dispositif d'alimentation en énergie de rayonnement selon l'une des revendications précédentes, qui est associé en supplément à une unité de commande (24),
**caractérisé en ce**
**que** la lumière (12) appliquée sur le substrat imprimé (14) à une position (116) est contrôlable dans son intensité et sa durée d'exposition pour chaque source d'énergie rayonnante (10) indépendamment des autres sources d'énergie de rayonnement (10).

5. Dispositif d'alimentation en énergie de rayonnement selon l'une des revendications précédentes,
**caractérisé en ce**
**que** la longueur d'ondes de 870,00 nm ± 50.00 nm et/ou 1050.00 nm ± 50.00 nm et/ou 1250.00 nm ± 50.00 nm et/ou 1600.00 nm ± 50.00 nm.

6. Dispositif d'alimentation en énergie de rayonnement selon l'une des revendications précédentes,
**caractérisé en ce**
**que** la lumière (12) d'au moins deux sources d'énergie de rayonnement (10) est incidente à une position (116) sur le substrat imprimé (14).

7. Dispositif d'alimentation en énergie de rayonnement selon l'une des revendications précédentes, dans lequel la machine d'impression à plat présente au moins deux groupes d'impression (30),
**caractérisé en ce**
**que** la position (116) à laquelle la lumière s'applique sur le substrat imprimé (14) dans la trajectoire (16) à travers la machine d'impression à plat, est disposée en aval du dernier interstice d'impression (18) du dernier groupe d'impression (30) du nombre de groupes d'impression.

8. Machine d'impression à plat comprenant au moins un groupe d'impression (30),
**caractérisée**
**par**
un dispositif d'alimentation d'énergie de rayonnement selon l'une quelconque des revendications précédentes.

9. Procédé pour l'alimentation en l'énergie de rayonnement d'une longueur d'ondes sur un substrat imprimé (14) dans une machine d'impression à plat, dans l'infra-rouge proche par projection de lumière (12) à partir d'au moins une source d'énergie de rayonnement (10) sur un support imprimé (14) dans une machine d'impression à plat, la lumière (12) faisant impact sur le substrat imprimé ( 14) sur la trajectoire (16) du substrat imprimé (14) en traversant la machine d'impression à plat à une position (116) qui est au moins en aval d'un interstice d'impression (18) dans un groupe d'impression,
**caractérisé par**
l'insertion d'un dispositif d'alimentation en énergie de rayonnement selon l'une des revendications de 1 à 8 et **caractérisé en ce**
**qu'**une source de rayonnement (10) du dispositif n'émet essentiellement que de la lumière (12) dont la longueur d'ondes est non résonnante par rapport aux longueurs d'ondes d'absorption de l'eau (H₂O)
ainsi que par
le soutien de l'absorption de l'énergie de rayonnement dans l'encre d'impression par au moins une substance absorbant l'infrarouge, laquelle est ajoutée à l'encre d'impression et en ce que la lumière émise par la source de rayonnement (10) est essentiellement résonante par rapport à un maximum d'absorption de la substance absorbant l'infrarouge.

10. Procédé d'application d'énergie de rayonnement selon la revendication 9,
caractérisé en ce
ce que la substance absorbant l'infra-rouge est l'une des substances suivantes : Benzenaminium-N,N'-2,5-cyclohexadiène-1,4-diylidenebis[4-(dibutylamino)-N-[4-(dibutylamino)phényl] diperchlorate, Bis(3,4-diméthoxy-2'chlorodithiobenzil)nickel, 3-butyl-2(2-[-2-(3-butyl-l,l-diméthyl-1,3-dihydro-benzo[e]indolium perchlorate et 2[2-[2chloro-3-[2-3-éthyl-11,3-dihydro-1,1-diméthyl-2H-benzo[e]indol-2ylidène)-éthylèdene)-lcyclohéxène-1-yl]-éthényl]3-éthyl-1,1diméthyl-1H-benzo[e]indolium tétraflouroborate.

11. Procédé d'alimentation en énergie de rayonnement selon la revendication 9 ou 10, le procédé étant mis en oeuvre dans une machine d'impression à plat ayant une pluralité de groupes d'impression (30) dans lesquelles une pluralité d'encres d'impression sont utilisées pour l'impression,
**caractérisé par**
la préparation d'au moins une encre parmi la pluralité des encres d'impression avec une substance absorbant l'infrarouge avant l'impression des encres.
